# EUROPEAN PATENT SPECIFICATION

(11) **EP 3 015 839 B1**
(45) Date of publication and mention of the grant of the patent: **01.01.2020**
(21) Application number: 14425138.6
(22) Date of filing: 31.10.2014
(51) Int. Cl.: G01M 5/00

(54) **Laser pointing system for monitoring stability of structures**
Laserzeigesystem zur Überwachung der Stabilität von Strukturen
Système de pointage laser pour surveiller la stabilité de structures

(43) Date of publication of application: 04.05.2016
(73) Proprietor: Agisco S.r.l., 20124 Milano (IT)
(72) Inventor: Robotti, Franco, 20090 Segrate (MI) (IT); Arrigoni, Marco, 23807 Merate (Lecco) (IT)
(74) Representative: Zizzari, Massimo

(56) References cited:
- EP-A2- 1 363 415
- WO-A1-81/03698
- CN-A- 102 967 263
- US-A1- 2004 107 671

## Description

The present invention relates to a laser pointing system for monitoring the stability of civil structures and historical buildings. More exactly, this system is able to detect movements of parts of structures, such as buildings, roads, tunnels and viaducts, using a series of laser pointing systems directed towards their respective targets which are at least one pair of photocameras or cameras. An images acquisition system and processing, captured by cameras, detects the change in position of the respective points of laser emission, in such a way that determine, through the use of mathematical formulas, displacements and/or rotations of the same structure, with a high level of reliability and accuracy.

Nowadays, the monitoring of buildings and infrastructures in general is one of the major technological challenges in structural field. It requires instruments of high precision, high reliability, high flexibility of analysis and calculation. By monitoring, in fact, it is possible to verify the actual behavior of structures and activate, in an automatic way, any alarms when the tolerance thresholds are overcoming. Further, in view of the preparation of attendances of recovery, restoration or adaptation of buildings, the exact diagnosis, validated by instrumental monitoring, enables the design of targeted interventions, ensuring the adoption of the most appropriate for the solution of current problems.

The state-of-art reports an attempt to design systems suitable for the monitoring of the stability of civil structures and historical buildings, which, in presence of natural phenomena or during structural feature, show critical points where it's possible highlight important discontinuities, deformations and rotations.

Traditional surveying techniques provide reflective prisms positioned on buildings that are measured with very high accuracy periodically by total stations. This technique has the drawback of having high costs of maintenance and construction due to the presence of moving parts. It presents also the disadvantage of not allowing the evaluation of the specific rotations of the point's measurement and movement, because they are not projected towards the targets and they are determined by the transformation of coordinates (elevation, azimuth and distance). These drawbacks make this technique very laborious and complex.

There are also been proposed additional techniques for structures' monitoring involving the use of a pair of cameras or photocameras able, through appropriate computing algorithms, to reconstruct the position and spatial orientation of an object. Some examples are techniques described in the documents US 7227526 and WO 89/09922. In other cases, the cameras are placed on the same parallel plane of the object to be detected, or are the two components of the same stereo-camera as in the document US 2009/0058993; in other cases the cameras must be convergent such as in the documents US 2011/0043620 and US 2011/0229013.

The explicit use of laser pointing beam is described in EP 2275775, US 6166809 and WO 89/09922 although in different technically contexts. From the state of the art, the following additional documents are known: CN 102967263, EP 1363415, US 2004/107671 and WO 81/03698 A1. CN 102967263 relates to a system for determining the deflections of a bridge using two laser sources mounted to a single point and arranged to be in a reverse symmetric layout i.e. pointing in opposite directions (at 180 degrees) to one another. EP 1363415 discloses two independent laser sources pointing to different detection screens. The system of EP 1363415 forms part of an optical communication system designed to test for fluctuations in the properties of free space between the laser sources and their respective detectors. Similar to CN 102967263, US 2004/107671 discloses a system for detecting deflection and twist in an upright structure having two laser beams orientated parallel to one another. WO 81/03698 A1 uses a single laser source and target for monitoring the movement of a structure such as a high rise building.

However, systems of the prior art do not provide in any case, the presence of two simultaneous laser pointers in a measurement point of the structure, each of the which directed towards a respective camera or photocamera, and accordingly an appropriate system for acquisition and processing of data relating to the movement and/or the rotations of the same structure, as described in the present invention.

The object of the present invention is therefore constituted by a system according to appended claim 1 that overcomes all these problems and its main aim is to propose a laser pointing system particularly suitable for monitoring the stability of civil structures and historic buildings, such a system characterized by comprising a series of laser pointing devices directed towards the respective objectives of at least one pair of cameras or photocameras and a software for each camera that enables the processing of images taken by these cameras.

Another goal is that the same software performs the comparison of coordinates detected by the laser beam with the coordinates previously acquired, to detect small changes in the coordinates, and then have to determine any displacements and/or rotations of the critical points of the structure.

Another objective is that the said acquisition and image processing software determine through the use of mathematical formulas, starting from the coordinates' variations of the laser beam detected in the images from each camera, the absolute displacement and/or rotation of a point on the structure with respect to a reference plane with a high level of reliability and accuracy.

Another goal is that the points of the structure to be monitored, with respective pair of laser pointing devices, may be multiple, such as to detect displacements and/or rotations with respect to the lines or reference curves specifications of the same structure.

Another goal is that detection for each individual point can take place in correspondence of a given instant in which a control system active laser pointers to the same point of the structure, while all the others are deactivated, and then proceeding to turn with all the other points.

Therefore, the specific subject of the present invention, as defined in appended claim 1, is a laser pointing system for monitoring the stability of civil structures and historic buildings, comprising:
- a laser emitter located at a single point of a structure; characterised in that said laser emitter is constituted by two or more independent laser sources emitting laser beams adjustable towards their respective optical targets; each of said targets including a photocamera or camera, and being installed in a fixed position at a distance from the structure in their predetermined positions, in sight with respect to the laser beams; and wherein said laser emitter is composed by a connection element that allows, through the screwing of some bolts, to be hooked to the structure of which the displacement is to be measured, being fully in agreement to the measurement point;
- processing means for each of said photocameras or cameras, used for processing the acquired images, for the detection and storage of coordinates of the laser beam detected in each image;
- an electronic control unit which is configured through a means of communication to acquire the above coordinates acquired from each of the above photocameras or cameras and, through processing means to apply a formula to determine the displacements corresponding to the single point of the structure.

The present invention is now being described according to non-limiting examples, with particular reference to the figures of the enclosed drawings, where:
figure 1 is a view in axonometric perspective of a laser pointing system for monitoring the stability of the structures;
figure 2 is a view in axonometric perspective of the *laser* emitter;
figure 3 is a view in axonometric perspective of the target;
figure 4 is a view of a scheme that describes the acquisition cycle and image processing;
figure 5 is a view of a diagram which describes the principle of measurement of this system in the one-dimensional case;
figure 6 is a view in axonometric perspective of the same *laser* pointing system for monitoring the stability of the structures in the variant of three screens;
figure 7 is a view of a block diagram that describes the process of processing images acquired using optical targets;
figure 8 is a view of a diagram which describes the principle of measurement of this system in the case of three optical targets.

It is here underlined that only few of the many conceivable embodiments of the present invention are described, which are just some specific non-limiting examples, having the possibility to describe many other embodiments based on the disclosed technical solutions of the present invention, as defined in appended claim 1. The other different figures show the same elements using the same reference numbers.

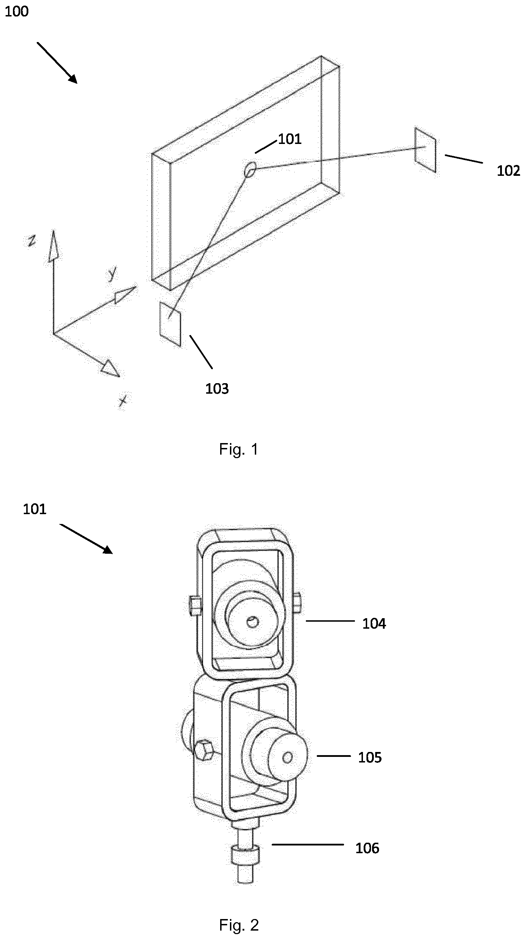

In Figure 1 it is represented a laser pointing system 100 to monitoring the stability of the structures. This system comprises a pair of devices 101 which emit laser beams, said *laser emitters,* placed on a point of the structure, defined *measuring point,* of which it is important to measure the relative displacement in every direction in the course of time. The *measuring point* has to be considered a mobile point because it represents a critical subject to displacements and rotations that may occur in the course of time. These *laser emitters* 101 are coupled to the measurement point by suitable bolts, allowing them to move in agreement with the said point of measurement. The *laser* beams that depart from the point under consideration are properly oriented towards two optical targets 102, 103, such as *photocameras* and *cameras,* situated in remote places, and around the same point. These targets 102, 103, that are the fixed points of the system, are placed in sight with respect to the emitters *laser,* in geometrical position not necessarily orthogonal to laser beams.

An innovative feature of the system 100, the subject of this invention, is the modularity. In fact it may be composed of one or more devices emitting *laser* beams 101 at a low power multi radius and two or more optical static measurement targets so as to monitor multiple points of the structure under examination. Each emission device of laser beams 101 transmits a beam of coherent light focused by a device of semiconductor called *laser* diode. So for each floating point, or portion of the area to be examined by a few square centimeters, this laser source is installed.

In figure 2 it is represented a view in axonometric perspective of the laser emitter 101. It is constituted by two or more independent laser sources 104, 105 adjustable to the respective optical targets 103, 102. It consists of a connection element 106 which allows through the screwing of some bolts to be attached to the frame where it is important to have the measure of the displacement being completely in agreement to the measurement point.

The power of the *laser* emitter 101 is given by using a battery or using a cable. A system with low consumption, such as for example the standard Zigbee and Wi-Fi, can power up the system in wireless mode. The laser emitter 101 is controlled also by wire from a fixed location. The system 100 also provides an autonomous *timer* that allows to turn on/off the laser emitting 101. In this case, optical targets are always active and identify the source for temporal diversity or spectral diversity.

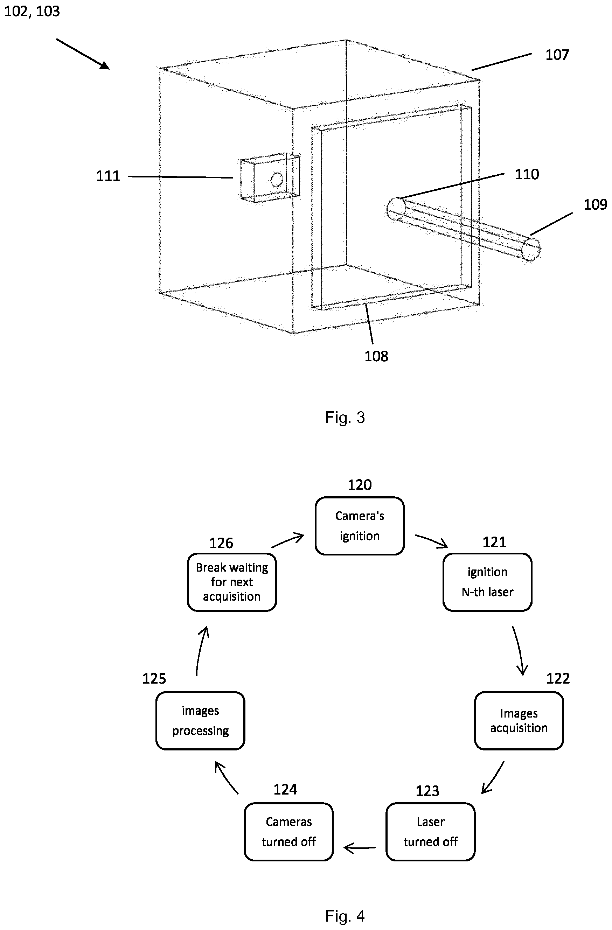

In figure 3 it is represented a view in axonometric perspective of the target 102 or 103. It consists of a container of parallelepiped shape 107 in which a surface is constituted by a transparent frosted or opal glass matched to a *"ground glass"* optical filter 108 which is achieved by a *laser* beam, said *"laser beam"* 109. In the point of incidence on the glass surface, the *laser* beam forms a bright spot called *"spot"* 110. The laser beam does not exceed the glass with the optical filter but the resulting *spot* is clearly visible from the opposite side, inside, where there is a high-resolution camera or a video camera 111 which acquires and processes the image using an appropriate software. The lens of the camera or videocamera 111 has an optical field suitable to resume the entire surface of the glass with a focal distance equal to the distance between the lens and the same glass in order to have a clear shot. The resulting image from the camera 111 is a dark surface which highlights very intensely the spot 110 and the halo of refraction of the laser beam due to the opaque glass surface 108.

In figure 4 it is represented a block diagram that describes the cycle of acquisition and processing of images. After starting the optical targets 120, such as cameras 111, and the ignition of the laser emitter 121, the laser beams reach the sensitive surface of the target. A software embedded in each camera 111 allows the image acquisition 122 by an appropriate digitalization process. Subsequently, it takes place the switch off of the laser emitters 123 and the switch off of the camera 124.

The software of each camera allows through appropriate processing algorithms the image acquisition 125 enabling the detection and storing of coordinates of the laser beam detected in each image, and the assessment of possible changes compared to the coordinates previously acquired. After a break 126 in the acquisition process, the system is reactivated to start the acquisition of a new image. The measurements of the movements are detected and acquired at a specific time rate and immediately processed to obtain the carriers and the resulting trajectories of the actual displacement on the three geometric planes which are perpendicular each other or to the space. The detection for each individual point can occur in a given instant in which a control system activates the pointing laser of a same point of the structure while all the others are turned off and then proceed in turn with all other points.

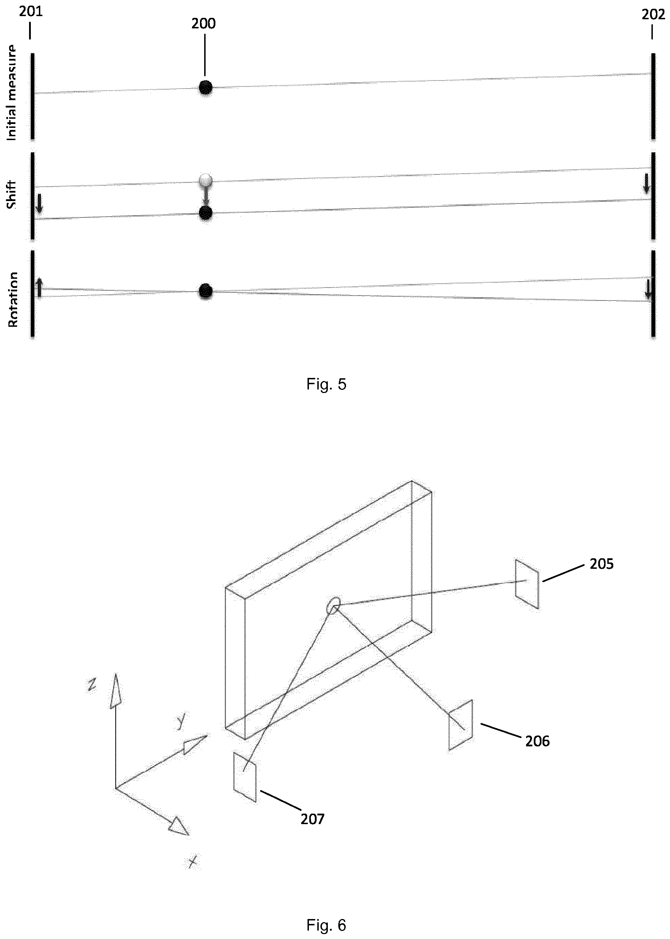

Figure 5 shows a view of a diagram which describes the principle of measurement of this system in the one-dimensional case; the measurement principle is based on the displacement of the spot on the screen 110 of the optical targets 102, 103 (Figure 3). The image of the screen is taken up by the camera of the optical target and it is sent in digital format to processing means that using an appropriate software process information to determine the position of the spot compared to the coordinate axes of the optical surface. As shown in Figure 5, two targets 201, 202 are arranged opposite each other at the turn of the measuring point not necessarily equidistant compared to the point to obtain the correct measurement of the displacement of the moving point.

Figure 5 shows how the laser beams arrive on optical surfaces of the targets in one-dimensional case, with respect to the initial state, after a displacement and a rotation, and shows how the optical source 200 projects two beams, one towards the target 201 and another to the target 202. The first example shows the initial state, the time of installation of the system, where two rays reach the optical surface of the two targets 201, 202, in arbitrary position, called the origin and determining the origin of the axes X and Y. The second example shows the effect of a rigid displacement of the point in the parallel direction to the target, where the laser beam, projected on the two targets 201, 202 moves by a quantity which is equal to that of the original displacement. In the third figure the point of measure is submitted to a pure rotation. The rotation induces shifts of opposite sign on the two screens of the respective targets 201, 202.

The accuracy of measurement requires that the screens of the two targets 201, 202 are parallel each other, an optical viewfinder in the top of each target allows the correct alignment during installation of the measuring system.

Figure 6 is a view in axonometric perspective of the same laser pointing system for monitoring the stability of the structures in the variant to three screens. The set of three targets 205, 206, 207 allows the detection of the position point in the space relative to the three geometric planes represented by the sensitive surface, as well as its rotation around the coordinate axes. Then the system composed by three laser beams is able to follow the movement of the point in the surrounding space with six degrees of freedom. In fact, a translation along the x-axis corresponds to a movement of the spot on the screens 205 and 207; a translation along the y-axis corresponds to a displacement of the spot on the screen 206; a translation along the z-axis corresponds to a displacement of the spot in the screens 205, 206 and 207. In the case of a rotation around the x axis, there is a positive displacement on 205 and negative displacement on 207 or viceversa; in the case of a rotation around the y axis, it occurs one displacement of 206 and no displacement of 205 and 207; in the case of a rotation around the z axis, it occurs a displacement on 205, 206 and 207.

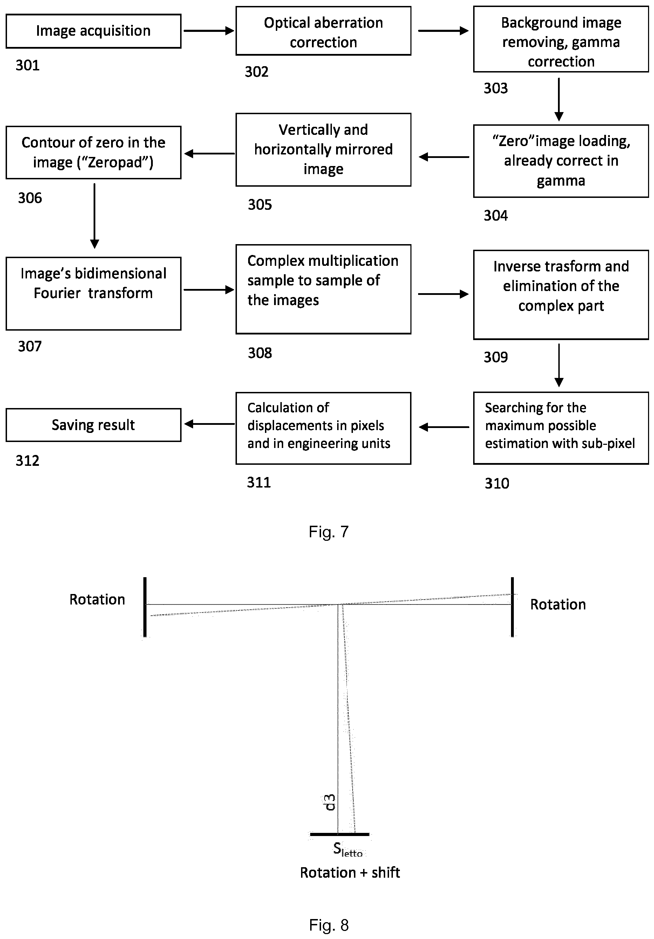

Figure 7 shows a view of a block diagram that describes the procedure of processing of image processing using optical targets in order to proceed in the measurement of the displacement of the moving point. After occurred the acquisition of the images 301, an appropriate software of an electronic card contained in the target in communication for example with a photocamera or with a camera is moving in the correction of optical aberrations of the lens. Next step is the removal of the background brightness of the image 302: in this way, night and day appear the same way in the elaboration of the data: all the points below the average brightness of the image are set to zero. The remainder is raised to power: the lighter areas are brighter, the dark areas are darker (sometimes this operation is called "gamma correction"). In this way, any brightness remaining on the screen due to different incidences by the laser are reduced or eliminated.

After the upload of the correct image in gamma 303, the image, after the process of convolution, is reflected horizontally and vertically 304. The image thus obtained, is surrounded by zeros (zero-padding) 305 to address the effects of convolution on images of limited size that is convolved with the initial image (which has also submitted to the same process of elaboration).

In particular, it is calculated by two-dimensional Fourier transform of images 307, as more computationally efficient, and followed by the complex multiplication pixel by pixel in the Fourier domain 308. Then, it is calculated the inverse Fourier transform and the elimination of the complex part of the inverse Fourier transform 309, eliminating the noise and searching the maximum of the real part 310. Derived the coordinates of the peak of the inverse Fourier transform, displacements are calculated 311 as the difference between the coordinates of the position of peak and the vertical/horizontal size of the image. Then it is operated the storing of the result 312. The coordinate differences thus obtained are used to measure displacements and rotations. For the latter, it is necessary to know the distance between the screens.

The displacement of a pixel is proportional to the opening screen visible from the camera: a screen of width L and height H and acquired by a camera of RL to RH resolution means that each pixel of horizontal/vertical displacement is equal to respectively at L/RL and H/RH.

Given the displacement of two screens S1 = L1/RL1 and S2 = L2/RL2, the angle of rotation can be valued as atan ((S1-S2)/d), where d is the distance between the screens.

In the case of processing three mutually orthogonal screens having 8 degrees of measurement for 6 degrees of freedom, it will have redundancy of a rotation and of a displacement. Indeed, the rotation's measure may be used to correct the data of displacement, as shown in Figure 8; S = Sletto-d3 *tan (rot), where rot is the rotation estimated. Similarly, the vertical displacement must be purified of the vertical displacement obtained by the other two screens.

The examples above demonstrate, therefore, that the present invention achieves all the proposed objects. It allows in particular to provide a pointing laser system for monitoring the stability of civil structures and historical buildings which is able to detect the movements of parts of structures, such as buildings, roads, tunnels and viaducts, using a series of laser pointing devices directed towards the respective objectives of at least one pair of photocameras or cameras. The same system includes an acquisition and image processing *software* acquired by cameras that detects the variation in position of the respective points of laser emission, so as to determine, through the use of mathematical formulas, displacements and / or rotations of the same structure.

Always according to the innovation, said software performs the comparison of the coordinates of the detected laser beam with the coordinates previously acquired, such as to detect small changes of coordinates and allows to determine possible displacement and / or rotations of the critical points of the structure.

Still according to the innovation, said acquisition and image processing software determines, through the use of mathematical formulas, the absolute displacement and / or rotation of a point of the structure relative to a reference plane with a high level of reliability and accuracy.

And yet, the detection for each individual point can occur in a given instant in which a control system activates the pointing laser of the same point of the structure, while all others are turned off, and then proceed in turn with all other points.

## Claims

1. Laser pointing system (100) for monitoring the stability of civil structures and historic buildings, comprising:
- a *laser emitter* (101) located at a single point of a structure; **characterised in that** said *laser emitter* (101) is constituted by two or more independent *laser sources* (104, 105, ...) emitting laser beams adjustable towards their respective *optical targets* (102, 103, ...); each of said targets including a photocamera or camera, and being installed in a fixed position at a distance from the structure in their predetermined positions, in sight with respect to the laser beams; and wherein said *laser emitter* (101) is composed by a *connection element* (106) that allows, through the screwing of some bolts, to be hooked to the structure of which the displacement is to be measured, being fully in agreement to the measurement point;
- processing means for each of said photocameras or cameras, used for processing the acquired images, for the detection and storage of coordinates of the laser beam detected in each image;
- an electronic control unit which is configured through a means of communication to acquire the above coordinates acquired from each of the above photocameras or cameras and, through processing means to apply a formula to determine the displacements corresponding to the single point of the structure.

## Patentansprüche

1. Laser-Zielgerät (100) zur Überwachung der Stabilität von Zivilbauten und historischen Gebäuden, bestehend aus:
- einer *Laserstrahl-Abgabevorrichtung* (101), die an einem einzelnen Punkt eines Baus angeordnet ist und sich dadurch auszeichnet, dass diese *Laserstrahl-Abgabevorrichtung* (101) aus zwei oder mehr voneinander unabhängigen *Laserquellen* (104, 105, ...) besteht, die auf die jeweiligen *optischen Linsen* (102, 103, ...) einstellbare *Laserstrahlen* aussenden, wobei jede der optischen Linsen eine Foto- oder Videokamera umfasst und in einer festen Position in einem Abstand vom Bau in den vorbestimmten Positionen installiert ist, die von den *Laserstrahlen* erreicht werden, wobei die besagte *Laserstrahl-Abgabevorrichtung* (101) ein Verbindungselement (106) umfasst, das durch Einschrauben einiger Bolzen in den Bau, dessen Verschiebung gemessen werden soll, eine Verankerung ermöglicht, wodurch sie vollständig eins mit dem Messpunkt wird
- Verarbeitungsmittel für jede einzelne der vorgenannten Foto- oder Videokameras, die zum Verarbeiten der erfassten Bilder, das Messen und Speichern der Koordinaten des in jedem Bild erfassten *Laserstrahls* verwendet werden
- einem elektronischen Steuergerät, das durch Kommunikationsmittel so ausgelegt ist, dass es die zuvor genannten Koordinaten erfasst, die von jeder der zuvor genannten Foto- oder Videokameras erfasst wurden, und mittels Verarbeitungsmittel eine Formel anwendet, um die entsprechenden Verschiebungen des einzelnen Punkts des Baus zu bestimmen.

## Revendications

1. Système de pointage laser (100) pour la surveillance de la stabilité des bâtiments civils et historiques, comprenant :
- un *émetteur laser* (101) situé à un endroit unique d'un bâtiment ; **caractérisé par le fait que** ledit émetteur laser (101) est constitué de deux ou plusieurs *sources laser* indépendantes (104, 105, ...) qui émettent des faisceaux laser pouvant être orientés vers leurs *objectifs optiques* respectifs (102, 103, ...) ; chacun desdits objectifs optiques comprenant un appareil photo ou une caméra, étant installé dans une position fixe loin du bâtiment dans leurs positions prédéfinies, bien en vue par rapport aux faisceaux *laser*; et où ledit *émetteur laser* (101) comporte un élément de raccordement (106) qui permet, par le vissage de certains boulons, d'être fixé au bâtiment dont on veut mesurer le déplacement, étant totalement solidaire au point de mesure ;
- des moyens de traitement pour chacun desdits appareils photo ou caméras, utilisés pour traiter les images acquises, pour détecter et enregistrer les coordonnées du faisceau laser détecté dans chaque image ;
- une unité de commande électronique qui, par l'intermédiaire des moyens de communication, est configurée pour acquérir lesdites coordonnées détectées par chacun desdits appareils photo ou caméras et qui, par l'intermédiaire des moyens de traitement, applique une formule pour déterminer les déplacements correspondants du point unique du bâtiment.
